# EUROPÄISCHE PATENTANMELDUNG

(11) **EP 4 475 150 A1**
(43) Veröffentlichungstag der Anmeldung: **11.12.2024**
(21) Anmeldenummer: 23177628.7
(22) Anmeldetag: 06.06.2023
(51) Int. Cl.: H01F 38/14, H01R 3/00, G08C 17/00, H02J 50/10, H04B 5/00, G02B 6/38, E03F 7/12

(54) **STECKERSYSTEM FÜR KANALINSPEKTIONS- UND/ODER WARTUNGSSYSTEME**

(71) Anmelder: iPEK International GmbH, 87477 Sulzberg (DE)
(72) Erfinder: Kennerknecht, Gerhard, 87561 Oberstdorf-Tiefenbach (DE); Münzer, Daniel, 87477 Sulzberg (DE)
(74) Vertreter: 2s-ip Schramm Schneider Bertagnoll Patent- und Rechtsanwälte Part mbB

(57) **Zusammenfassung**

Bereit gestellt wird eine Steckereinheit für eine Komponente eines Kanalinspektions- und/oder Wartungssystem, wobei die Steckereinheit
- eine Energieübertragungseinrichtung zum Übertragen von elektrischer Energie zwischen der Steckereinheit und einer weiteren Steckereinheit, und
- eine Signalsende- und/oder Signalempfangseinrichtung, die ausgebildet ist, Daten zwischen der Steckereinheit und der weiteren Steckereinheit drahtlos zu übertragen,
umfasst, wobei die Steckereinheit mit der weiteren Steckereinheit lösbar koppelbar ist.

## Beschreibung

### Gebiet der Erfindung

Die Erfindung betrifft eine Steckereinheit für eine Komponente eines Kanalinspektions- und/oder Wartungssystems und eine Vorrichtung zur Kopplung von zwei Steckereinheiten.

### Hintergrund der Erfindung

Zur Durchführung von Rohr- bzw. Kanalinspektionen und Wartungsarbeiten in Kanalsystemen ist es bekannt, Kanalinspektions- bzw. Wartungssysteme zu verwenden. Derartige Kanalinspektions- bzw. Wartungssysteme weisen in der Regel eine Steuereinheit auf, die außerhalb des Kanals aber auch im Kanal verwendet werden kann, um das jeweilige Kanalinspektions- bzw. Wartungssystem zu steuern und/oder von dem jeweiligen Kanalinspektions- bzw. Wartungssystem Daten, etwa Videodaten, entgegenzunehmen. Die Verbindung zwischen der Steuereinheit und dem Kanalinspektions- bzw. Wartungssystem kann drahtgebunden oder drahtlos sein.

In derartigen Kanalinspektions- und/oder Wartungssystemen werden im Einsatz üblicherweise mehrere Komponenten miteinander kombiniert, wie etwa ein Fahrwagen, an dem zusätzliche Komponenten, beispielsweise ein Licht oder eine Kamera, angeordnet sind. Zur Anordnung von derartigen Zusatzkomponenten werden derzeit herkömmliche mehrpolige Steckverbinder genutzt.

Steckverbinder bzw. Steckersysteme in Kanalinspektions- und/oder Wartungssystemen unterliegen im Kanalsystem äußerst schwierigen Umwelteinflüssen, insbesondere hinsichtlich Feuchtigkeit und Schmutz. Dementsprechend bestehen hohe Sicherheitsanforderungen an derartige Steckverbinder bzw. Steckersysteme. Die Stecker müssen zudem den Anforderungen hinsichtlich Sicherheit und Explosionsschutz genügen. Insofern erfordern die für Komponenten eines Kanalinspektions- und/oder Wartungssystems angepassten Steckverbinder nach dem herkömmlichen Konzept trotz ihres vermeintlich einfachen Aufbaus eine sehr aufwändige, komplexe und kostenintensive Herstellung.

### Aufgabe der Erfindung

Aufgabe der vorliegenden Erfindung ist daher, einen Steckverbinder bzw. eine Steckereinheit und eine Vorrichtung zur Kopplung zweier Steckereinheiten für den Einsatz in Kanalsystemen bereitzustellen, die einfacher zu fertigen, wartungsärmer, weniger empfindlich gegenüber Verschmutzungen und einfacher handzuhaben sind.

### Erfindungsgemäße Lösung

Erfindungsgemäß wird diese Aufgabe durch die Steckereinheit nach dem unabhängigen Patentanspruch 1 und die dazugehörige Vorrichtung nach dem Patentanspruch 10 gelöst. Vorteilhafte Ausgestaltungen und Weiterentwicklungen der Erfindung sind in den jeweils abhängigen Patentansprüchen angegeben.

Bereitgestellt wird demnach eine Steckereinheit für eine Komponente eines Kanalinspektions- und/oder Wartungssystem, wobei die Steckereinheit
- eine Energieübertragungseinrichtung zum Übertragen von elektrischer Energie zwischen der Steckereinheit und einer weiteren Steckereinheit, und
- eine Signalsende- und/oder Signalempfangseinrichtung, die ausgebildet ist, Daten zwischen der Steckereinheit und der weiteren Steckereinheit drahtlos zu übertragen,
umfasst, wobei die Steckereinheit mit der weiteren Steckereinheit lösbar koppelbar ist.

Die Ausgestaltung der Signalübertragung zwischen der Steckereinheit und einer weiteren Steckereinheit als drahtlose Signalübertragung hat den Vorteil, dass weniger Kontakte auf der Steckereinheit bereitgestellt werden müssen. Erforderlich sind demnach höchstens noch die Kontakte für die Energieübertragung bzw. Stromversorgung, wobei auf diese Kontakte bei einer drahtlosen Energieübertragung ebenfalls verzichtet werden kann. Damit kann die Anzahl der Pole auf maximal zwei reduziert werden - bei einer induktiven Energieübertragung sogar auf null. Insofern ist die erfindungsgemäße Steckereinheit mechanisch weniger komplex zu fertigen, da weniger bis gar keine Kontaktstifte vorgesehen werden müssen. Zusätzlich vereinfacht sich die Wartung der Steckereinheit.

Die erfindungsgemäße Steckereinheit unterliegt ferner einem geringen Verschleiß bzw. hat eine höhere Lebenserwartung als vorbekannte Steckverbinder aufgrund der kleineren Anzahl an erforderlichen Polen. Zudem können die hohen Sicherheitsanforderungen und Normen hinsichtlich Brandschutz, elektromagnetischer Verträglichkeit und Explosionsschutz durch die erfindungsgemäße Steckereinheit einfacher eingehalten bzw. realisiert werden.

Die Bandbreite der drahtlosen Datenübertragung zwischen der Steckereinheit und der weiteren Steckereinheit kann so dimensioniert sein, dass auch Videodaten, insbesondere hochaufgelöste Videodaten, übertragen werden können. Zudem können unterschiedliche Übertragungsstrecken für Videodaten und Steuer- bzw. Sensordaten bereitgestellt werden.

Ein wesentlicher Vorteil der Erfindung liegt darin, dass auf Maßnahmen zum Explosionsschutz, die auf dem Gebiet der Kanalinspektion- und/oder Wartung zwingend notwendig sind, teilweise oder ganz verzichtet werden kann. Jedenfalls kann der Aufwand für Explosionsschutzmaßnahmen deutlich reduziert werden, was die Herstellung und Wartung erheblich vereinfacht.

Es kann vorgesehen sein, dass die Energieübertragungseinrichtung zumindest zwei kontaktführende Buchsen umfasst. Ferner kann es vorgesehen sein, dass die Energieübertragungseinrichtung zumindest zwei kontaktführende Stifte umfasst.

Nach diesen Ausgestaltungen hat die Steckereinheit (optional) entweder zwei kontaktführende Buchsen, oder zwei kontaktführende Stifte, die jeweils zu einer (optionalen) Buchse einer anderen Steckereinheit korrespondieren.

Die Energieübertragungseinrichtung kann ein Modul umfassen, das angepasst ist, die elektrische Energie zwischen der Steckereinheit und der weiteren Steckereinheit auf induktiver Basis zu übertragen.

Nach diesem Aspekt der Erfindung kann die Steckereinheit ohne kontaktführende Stifte bzw. kontaktführende Buchsen ausgestaltet werden, sodass die Schnittstelle der Steckereinheit beispielsweise als ebene Fläche ausgebildet werden kann. Diese Ausgestaltung vereinfacht die Konstruktion, Fertigung und Produktion der Steckereinheiten erheblich, insbesondere da weniger mechanische Toleranzen einzuhalten sind. Zudem ist die Lebenserwartung der Steckereinheit durch diese Ausgestaltung weiter erhöht, da die Energieübertragungseinrichtung und die Signalsende- und/oder Signalempfangseinrichtung so gut wie keiner mechanischen Belastung ausgesetzt sind.

Ferner kann die Steckereinheit zudem druckdicht und wasserdicht ausgestaltet sein.

Vorteilhaft kann es sein, wenn die Steckereinheit rotationssymmetrisch um deren Längsachse ausgebildet ist.

Die rotationssymmetrische Ausgestaltung der Steckereinheit hat den Vorteil, dass der Steckereinheit in jeder beliebigen Position mit der weiteren Steckereinheit gekoppelt werden kann. Hierzu sind auch die Energieübertragungseinrichtung und die Signalsende- und/oder Signalempfangseinrichtung rotationssymmetrisch auszugestalten. Eine derartige Ausgestaltung der Steckereinheit vereinfacht somit deren Handhabung im Betrieb und fördert die Langlebigkeit der Steckereinheit. Bei rotationssymmetrischen Steckereinheiten kann zudem auf aufwendige und anfällige Schleifkontakte verzichtet werden. Es ermöglicht zusätzlich ein schnelles und einfaches Stecken ohne vorheriges Ausrichten einer Verdrehsicherung.

Alternativ kann die Steckereinheit derart ausgebildet sein, dass sie eine Vorzugsrichtung zum Koppeln mit einer weiteren Steckereinheit aufweist. Dadurch kann die Anordnung und Konstruktion der Energieübertragungseinrichtung sowie der Signalsende- und/oder Signalempfangseinrichtung vereinfacht werden.

Vorteilhaft kann es ein, wenn die Signalsende- und/oder Signalempfangseinrichtung einen ersten Signalempfänger- und/oder Sender umfasst, wobei der erste Signalempfänger- und/oder Sender angepasst ist, hochaufgelöste Bilddaten, Sensordaten und/oder Steuerdaten zwischen der Steckereinheit und der weiteren Steckereinheit drahtlos zu übertragen.

Ferner kann es vorteilhaft sein, wenn die Signalsende- und/oder Signalempfangseinrichtung einen zweiten Signalempfänger- und/oder Sender umfasst, wobei der zweite Signalempfänger- und/oder Sender angepasst ist, Bilddaten, Sensordaten und/oder Steuerdaten zwischen der Steckereinheit und der weiteren Steckereinheit drahtlos zu übertragen.

Der erste Signalempfänger und/oder -sender ist demnach angepasst, hochaufgelöste Bilddaten und/oder Steuerdaten über eine drahtlose Kommunikationsverbindung zwischen der Steckereinheit und der weiteren Steckereinheit zu übertragen. Dies schließt das Empfangen von hochaufgelösten Bilddaten und/oder Steuerdaten sowie das Versenden derselben ein. Hierfür können an sich bekannten Nahfeld-Funkstandards verwendet werden.

In einer Ausgestaltung der Erfindung kann die drahtlose Energieübertragung zwischen zwei Steckereinheiten mittels induktiver Kopplung erfolgen. In einer Ausgestaltung der Erfindung kann die drahtlose Übertragung von Daten zwischen zwei Steckereinheiten mittels kapazitiver Kopplung erfolgen.

Zwischen dem ersten Signalempfänger und/oder -sender der Steckereinheit und dem jeweiligen Signalempfänger und/oder -sender der weiteren Steckereinheit kann eine erste drahtlose Kommunikationsverbindung aufgebaut werden. Zwischen dem zweiten Signalempfänger und/oder -sender und dem jeweiligen Signalempfänger und/oder -sender der weiteren Steckereinheit kann eine zweite drahtlose Kommunikationsverbindung aufgebaut werden. Die beiden drahtlosen Kommunikationsverbindungen können sich insbesondere in ihrer Bandbreite unterscheiden, da zur Übertragung von hochaufgelösten Bilddaten eine höhere Bandbreite benötigt wird als zur Übertragung von Steuerdaten.

Die Steckereinheit kann ein Gehäuse umfassen. Am Gehäuse der Steckereinheit kann ein Arretiermittel angeordnet sein.

Das Gehäuse sorgt für einen Schutz der Schnittstelle der Steckereinheit vor Staub und Feuchtigkeit. Mittels des Arretiermittels kann ein unbeabsichtigtes Lösen der mit der weiteren Steckereinheit gekoppelten Steckereinheit im Betrieb vermieden werden. Diese Ausgestaltung ist insbesondere für das Anbinden von beweglichen Zusatzkomponenten, wie etwa einem Heber an einen Fahrwagen oder eine Kabeltrommel vorteilhaft.

Bereit gestellt wird ferner eine Vorrichtung zur Kopplung von zwei Komponenten eines Kanalreinigungs- und/oder Wartungssystems, wobei die Vorrichtung eine erste vorstehend genannte Steckereinheit und eine zweite vorstehend genannte Steckereinheit umfasst, wobei die beiden Steckereinheiten lösbar miteinander koppelbar sind, wobei die Kopplung der zwei Steckereinheiten
- zumindest eine drahtlose Kommunikationsverbindung zwischen der Signalsende- und/oder Signalempfangseinrichtung der ersten Steckereinheit (10) und der Signalsende- und/oder Signalempfangseinrichtung der zweiten Steckereinheit, und
- eine Energieübertragung zwischen der Energieübertragungseinrichtung der ersten Steckereinheit und der Energieübertragungseinrichtung der zweiten Steckereinheit
umfasst.

Die Vorrichtung bzw. das Steckersystem erbt die vorstehend beschriebenen Vorteile der einzelnen Steckereinheit, sodass die Vorrichtung eine wartungsarme, einfach zu konstruierende und zu fertigende Anbindung von Zusatzkomponenten in Kanalinspektions- und/oder Wartungssystemen ermöglicht. Zudem hält die Vorrichtung die normierten Sicherheitsanforderungen ein.

Die zumindest eine drahtlose Kommunikationsverbindung kann als bidirektionale Kommunikationsverbindung ausgestaltet sein.

Durch die zumindest eine bidirektionale Kommunikationsverbindung kann die Schnittstelle einer Steckereinheit spiegelsymmetrisch zur Schnittstelle einer weiteren Steckereinheit ausgebildet werden. Das bedeutet, dass jede Steckereinheit unabhängig davon, ob sie zum Senden oder Empfangen von Daten eingesetzt wird, mit der gleichen Signalsende- und/oder Signalempfangseinrichtung ausgebildet sein kann. Die Signalsende- und/oder Signalempfangseinrichtung sollte in dieser Ausgestaltung sowohl senden als auch empfangen können.

Diese Ausgestaltung kann die Konstruktion und Fertigung der Steckereinheiten für die erfindungsgemäße Vorrichtung weiter vereinfachen.

Vorteilhaft kann es sein, wenn bei der Kopplung der zwei Steckeinheiten die jeweiligen Energieübertragungseinrichtungen und Signalsende- und/oder Signalempfangseinrichtungen im Wesentlichen gas- und fluiddicht gegenüber der Umgebung abgedichtet sind.

Durch diese Ausgestaltung ist die Schnittstelle der Vorrichtung gegenüber Staub und Spritzwasser aus der kanaltypischen Umgebung geschützt. Die Abdichtung kann beispielsweise mittels einer radialen, umlaufenden Dichtung auf der ersten (oder zweiten) Steckereinheit ausgestaltet werden, wobei die zweite (oder erste) Steckereinheit durch ein entsprechendes Arretiermittel gegen die Dichtung gedrückt wird.

Die vorstehend genannten drahtlosen Kommunikationsverbindungen können als optische Kommunikationsverbindungen ausgestaltet sind.

### Kurzbeschreibung der Figuren

Weitere Einzelheiten und Merkmal der Erfindung, sowie konkrete, insbesondere vorteilhafte Ausgestaltungen der Erfindung ergeben sich aus der nachfolgenden Beschreibung in Verbindung mit der Zeichnung, die zeigt:
- Fig. 1: eine Seitenansicht einer Steckereinheit in Kopplung mit einer weiteren Steckereinheit nach einem ersten Aspekt der Erfindung;
- Fig. 2: eine Seitenansicht einer Steckereinheit in Kopplung mit einer weiteren Steckereinheit nach einem zweiten Aspekt der Erfindung; und
- Fig. 3: eine Seitenansicht einer Steckereinheit in Kopplung mit einer weiteren Steckereinheit nach einem dritten Aspekt der Erfindung, sowie eine Schnittebene A-A durch die Steckereinheit.

### Detaillierte Beschreibung der Erfindung

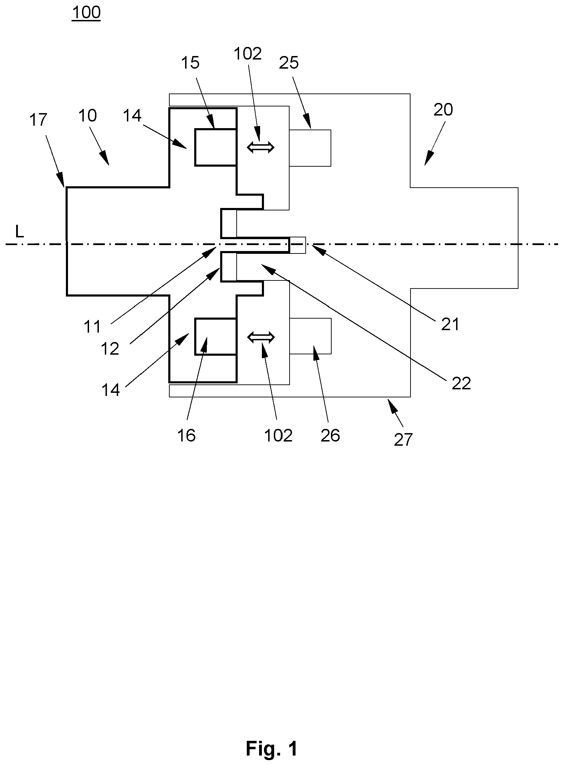

**Fig. 1** zeigt eine Seitenansicht einer Steckereinheit in Kopplung mit einer weiteren Steckereinheit nach einem ersten Aspekt der Erfindung.

Zu sehen in Fig. 1 ist eine Steckereinheit 10, die lösbar mit einer weiteren Steckereinheit 20 gekoppelt werden kann. Die Steckereinheit 10 umfasst eine Schnittstelle, die in der gekoppelten Anordnung der Schnittstelle der weiteren Steckereinheit 20 gegenübersteht.

Die Schnittstelle der Steckereinheit 10 umfasst eine Energieübertragungseinrichtung 11. Die Energieübertragungseinrichtung 11 der Ausgestaltung der Fig. 1 ist durch zwei kontaktführende Buchsen 12 ausgebildet. Die Buchsen 12 sind derart ausgebildet, dass die dazu korrespondierenden kontaktführenden Stifte 22 der Energieübertragungseinrichtung 21 der weiteren Steckereinheit 20 in die Buchsen formschlüssig eingreifen können. Durch Kopplung werden die Stifte 22 der weiteren Steckereinheit in Eingriff mit den Buchsen 12 der Steckereinheit gebracht. Die Energieübertragungseinrichtungen 11; 21 sind ausgebildet, elektrische Energie zwischen der Steckereinheit 10 und der weiteren Steckereinheit zu übertragen. Insofern kann die Energieübertragungseinrichtung 11 der Steckereinheit 10 die weitere Steckereinheit mit Strom versorgen und umgekehrt.

Ferner umfasst die Schnittstelle der Steckereinheit 10 in Fig. 1 eine Signalsende- und/oder Signalempfangseinrichtung 14, die ausgebildet ist, Daten zwischen der Steckereinheit 10 und einer entsprechenden Signalsende- und/oder Signalempfangseinrichtung 24 der weiteren Steckereinheit 20 drahtlos zu übertragen. Die drahtlose Datenübertragung 102 ist durch die beiden Doppelpfeile in Fig. 1 gekennzeichnet.

Die Signalsende- und/oder Signalempfangseinrichtung 14 der Fig. 1 umfasst zwei Signalempfänger und/oder -sender 15; 16, wobei der erste Signalempfänger und/oder -sender 15 zur Übertragung von hochaufgelösten Bilddaten und der zweite Signalempfänger und/oder -sender 16 zur Übertragung von Steuerdaten geeignet sein kann. Ebenso kann ein Signalempfänger und/oder -sender 15; 16 vorgesehen sein, der sowohl hochaufgelöste Bilddaten als auch Steuerdaten gleichzeitig übertragen kann. Die Signalsende- und/oder Signalempfangseinrichtung 24 der weitere Steckereinheit 20 kann entsprechend zwei Signalempfänger und/oder -sender 25; 26 aufweisen, die Steuerdaten bzw. Bilddaten von dem ersten und/oder zweiten Signalempfänger und/oder -sender 15; 16 der Steckereinheit 10 empfangen bzw. an diese senden.

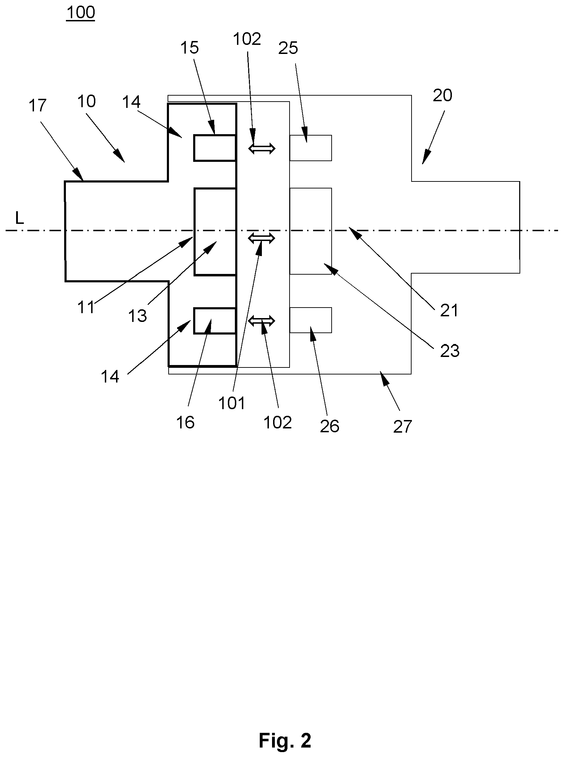

**Fig. 2** zeigt eine Seitenansicht einer Steckereinheit in Kopplung mit einer weiteren Steckereinheit nach einem zweiten Aspekt der Erfindung.

Zu sehen ist eine zweite Ausgestaltung der Steckereinheit 10, die ebenso lösbar koppelbar mit einer weiteren Steckereinheit 20 ist.

Die zweite Ausgestaltung unterscheidet sich von der Ausgestaltung der Fig. 1 insbesondere in der Ausbildung der Energieübertragungseinrichtung 11. Die Energieübertragungseinrichtung 11;21 in Fig. 2 weist keinerlei Pole bzw. kontaktführenden Buchsen oder Stifte auf, sondern basiert auf dem Prinzip der induktiven Kopplung 101. Hierfür umfasst die Energieübertragungseinrichtung 11 ein Modul 14 mit einer elektrischen Spule, in der durch die Änderung des magnetischen Flusses durch die Energieübertragungseinrichtung 21 der weiteren Steckereinheit 20 in dessen Nahfeld ein elektrischer Strom induziert werden kann. Auf diese Weise kann elektrische Energie von der Energieübertragungseinrichtung 21 der weiteren Steckereinheit in die Energieübertragungseinrichtung 11 der Steckereinheit 10 übertragen werden. Elektrische Energie kann entsprechend auch in die andere Richtung, also von der Energieübertragungseinrichtung 11 der Steckereinheit 10 zur Energieübertragungseinrichtung 21 der weiteren Steckereinheit 20 übertragen werden, wobei die Energieübertragungseinrichtung 21 ein entsprechendes Modul 24 mit einer elektrischen Spule umfasst.

Sowohl in der Ausgestaltungsform der Fig. 1 also auch in derjenigen der Fig. 2 kann die Energieübertragungseinrichtung 11 im Profil der Schnittstelle der Steckereinheit 10 zentriert angeordnet sein.

Für die erste Ausführungsform hat diese Anordnung den Vorteil, dass die kontaktführenden Stifte 22 gemäß Fig. 1 nahe zur Längsachse der weiteren Steckereinheit 20 in die jeweiligen Buchsen 12 der Steckereinheit 10 gesteckt werden können. Zudem dürfte der zentrale Bereich der Schnittstelle in dem gekoppelten Zustand zweier Steckereinheit 10; 20 am besten vor Staub bzw. Spritzwasser geschützt sein.

Für die zweite Ausführungsform hat diese Anordnung den Vorteil, dass das elektromagnetische Feld für die induktive Kopplung 101 weitgehend abgeschirmt werden kann.

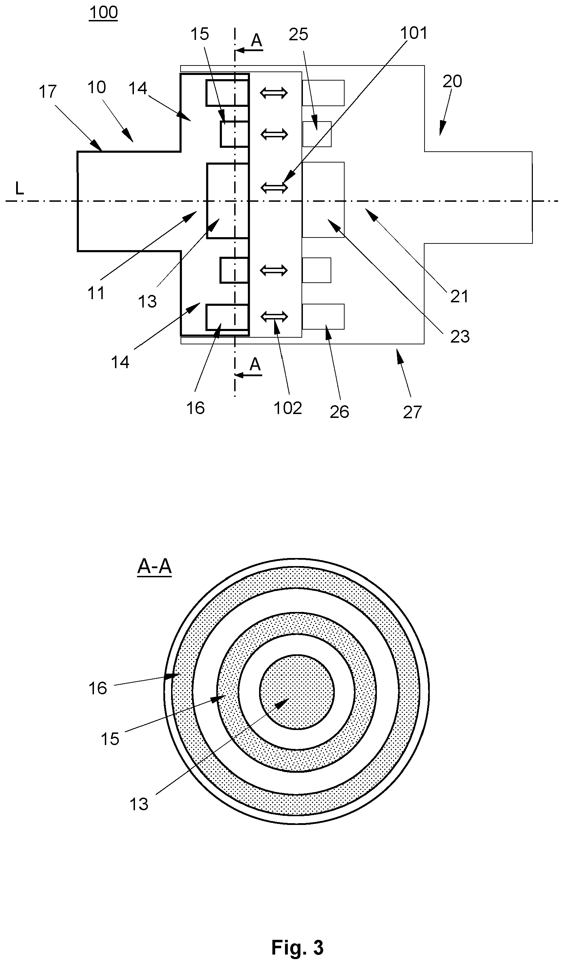

**Fig. 3** zeigt eine Seitenansicht einer Steckereinheit in Kopplung mit einer weiteren Steckereinheit nach einem dritten Aspekt der Erfindung, sowie eine Schnittebene A-A durch die Steckereinheit.

Die Ausgestaltung der Steckereinheit der Fig. 3 unterscheidet sich von der Ausgestaltung der Steckereinheit der Fig. 2 in der Anordnung der Signalsende- und/oder Signalempfangseinrichtung. Die Signalsende- und/oder Signalempfangseinrichtung in Fig. 3 umfasst einen ersten Signalempfänger und/oder -sender 15 und einen zweiten Signalempfänger und/oder -sender 16, wobei beide Signalempfänger und/oder -sender 15; 16 im Wesentlichen in konzentrischen Kreisen auf der Schnittstelle der Steckereinheit 10 angeordnet sein können. Damit können beide Steckereinheiten einerseits in einem beliebigen Drehwinkel zueinander miteinander gekoppelt werden. Andererseits kann der eine Stecker im laufenden Betrieb relativ zum anderen Stecker um seine Längsachse L gedreht werden. So wird es etwa möglich eine Kamera mit einem solchen Stecker zu versehen, sodass die Kamera samt Stecker in beide Richtungen gedreht werden kann.

Der Mittelpunkt der konzentrischen Kreise ist gegeben durch die Längsachse der Steckereinheit 10. Diese Ausgestaltung hat den Vorteil, dass die Steckereinheit 10 rotationssymmetrisch ist, also in jeder beliebigen Position mit einer weiteren Steckereinheit 20 koppelbar ist. Vorteilhafterweise ist die Energieübertragungseinrichtung 11 hierzu ebenfalls im Wesentlichen rund und zentriert in der Schnittstelle der Steckereinheit 10 angeordnet, wie in der Schnittebene A-A der Fig. 3 ersichtlich.

Die Steckereinheit 10 ist lösbar koppelbar mit einer weiteren Steckereinheit 20, wie auch in der Ansicht der Figuren 1 bis 3 dargestellt. Um sicherzustellen, dass die Kopplung zweier Steckereinheiten 10, 20 nicht unbeabsichtigt im Betrieb gelöst wird, etwa bei der Anbindung von beweglichen Zusatzkomponenten, kann ein Arretiermittel am Gehäuse 17 der Steckereinheit 10 bzw. am Gehäuse 27 der weiteren Steckereinheit 20 vorgesehen sein (nicht gezeigt). Dieses Arretiermittel kann etwa eine gefedert gelagerte Klemmvorrichtung sein, oder eine Magnetvorrichtung sein.

Mittels der Vorrichtung 100 bzw. des Stecksystems kann eine Kamera, insbesondere eine um 360° drehbare Kamera auf einem Fahrwagen eines Kanalinspektions- und/oder Wartungssystems angebunden werden. Die Kamera kann über die Energieübertragungseinrichtung 11 mittels induktiver Kopplung 101 mit Strom versorgt werden. Über die zumindest eine, vorzugsweise bidirektionale, drahtlose Kommunikationsverbindung 102 kann die Kamera gesteuert werden und ihre Bilddaten an eine Steuereinheit des Fahrwagens übertragen.

Ebenso kann mittels der Vorrichtung 100 ein Zusatzlicht auf einem Fahrwagen angebunden werden.

Ferner kann mittels der Vorrichtung 100 ein Heber, insbesondere ein Teleskopheber, an einen Fahrwagen angebunden werden. Dabei kann der Heber mittels der drahtlosen Kommunikationsverbindung 102 gesteuert werden und durch die induktive Kopplung 101 mit Strom versorgt werden.

An den Heber wiederum kann eine Kamera und/oder ein Zusatzlicht mittels der Vorrichtung 100 angebunden werden. Dadurch ermöglicht die erfindungsgemäße Steckereinheit eine einfach zu fertigende, wartungsarme und sichere modulare Erweiterung von Komponenten des Kanalinspektions- und/oder Wartungssystems.

Ferner kann mittels der Vorrichtung 100 ein Fahrwagen mit einer Kabeltrommel verbunden werden, wobei die Kabeltrommel mittels der induktiven Kopplung 101 den Fahrwagen mit Strom versorgen kann und mittels der zumindest einen drahtlosen Kommunikationsverbindung Steuerdaten an den Fahrwagen übermitteln bzw. Nutzdaten des Fahrwagens, wie etwa Bilddaten, empfangen kann. Hierzu kann die Kabeltrommel eine Steuereinheit aufweisen.

### Bezugszeichen:

- 10: Steckereinheit
- 11: Energieübertragungseinrichtung
- 12: Buchse
- 13: Modul der Energieübertragungseinrichtung 11
- 14: Signalsende- und/oder Signalempfangseinrichtung
- 15: erster Signalempfänger und/oder -sender
- 16: zweiter Signalempfänger und/oder -sender
- 17: Gehäuse
- 20: weitere Steckereinheit
- 21: Energieübertragungseinrichtung der weiteren Steckereinheit
- 22: Stifte
- 23: Model der Energieübertragungseinrichtung 21
- 24: Signalsende- und/oder Signalempfangseinrichtung der weiteren Steckereinheit 20
- 25: erster Signalempfänger und/oder -sender der Signalsende- und/oder Signalempfangseinrichtung 24
- 26: zweiter Signalempfänger und/oder -sender der Signalsende- und/oder Signalempfangseinrichtung 24
- 27: Gehäuse der weiteren Steckereinheit 20
- 100: Vorrichtung zur Kopplung zweier Steckereinheiten
- 101: induktive Kopplung
- 102: drahtlose Kommunikationsverbindung
- L: Längsachse der Steckereinheit

## Patentansprüche

1. Steckereinheit (10) für eine Komponente eines Kanalinspektions- und/oder Wartungssystem, wobei die Steckereinheit (10)
- eine Energieübertragungseinrichtung (11) zum Übertragen von elektrischer Energie zwischen der Steckereinheit (10) und einer weiteren Steckereinheit, und
- eine Signalsende- und/oder Signalempfangseinrichtung (14), die ausgebildet ist, Daten zwischen der Steckereinheit (10) und der weiteren Steckereinheit drahtlos zu übertragen,
umfasst, wobei die Steckereinheit (10) mit der weiteren Steckereinheit lösbar koppelbar ist.

2. Steckereinheit (10) nach Anspruch 1, wobei die Energieübertragungseinrichtung (11) zumindest zwei kontaktführende Buchsen (12) umfasst.

3. Steckereinheit (10) nach Anspruch 1, wobei die Energieübertragungseinrichtung (11) zumindest zwei kontaktführende Stifte (22) umfasst.

4. Steckereinheit (10) nach Anspruch 1, wobei die Energieübertragungseinrichtung (11) ein Modul (13) umfasst, das angepasst ist, die elektrische Energie zwischen der Steckereinheit (10) und der weiteren Steckereinheit auf induktiver Basis zu übertragen.

5. Steckereinheit (10) nach Anspruch 1, wobei die Steckereinheit (10) rotationssymmetrisch um deren Längsachse (L) ausgebildet ist.

6. Steckereinheit (10) nach Anspruch 1, wobei die Signalsende- und/oder Signalempfangseinrichtung (14) einen ersten Signalempfänger- und/oder Sender (15) umfasst, wobei der erste Signalempfänger- und/oder Sender (15) angepasst ist, hochaufgelöste Bilddaten, Sensordaten und/oder Steuerdaten zwischen der Steckereinheit (10) und der weiteren Steckereinheit drahtlos zu übertragen.

7. Steckereinheit (10) nach Anspruch 1, wobei die Signalsende- und/oder Signalempfangseinrichtung (14) einen zweiten Signalempfänger- und/oder Sender (16) umfasst, wobei der zweite Signalempfänger- und/oder Sender (16) angepasst ist, Bilddaten, Sensordaten und/oder Steuerdaten zwischen der Steckereinheit (10) und der weiteren Steckereinheit drahtlos zu übertragen.

8. Steckereinheit (10) nach Anspruch 1, wobei die Steckereinheit (10) ein Gehäuse (17) umfasst.

9. Steckereinheit (10) nach Anspruch 8, wobei am Gehäuse der Steckereinheit (10) ein Arretiermittel angeordnet ist.

10. Vorrichtung (100) zur Kopplung von zwei Komponenten eines Kanalreinigungs- und/oder Wartungssystems, wobei die Vorrichtung eine erste Steckereinheit (10) nach einem der vorhergehenden Ansprüche und eine zweite Steckereinheit (20) nach einem der vorhergehenden Ansprüche umfasst, wobei die beiden Steckereinheiten (10; 20) lösbar miteinander koppelbar sind, wobei die Kopplung der zwei Steckereinheiten (10; 20)
- zumindest eine drahtlose Kommunikationsverbindung (102) zwischen der Signalsende- und/oder Signalempfangseinrichtung (14) der ersten Steckereinheit (10) und der Signalsende- und/oder Signalempfangseinrichtung (24) der zweiten Steckereinheit (20), und
- eine Energieübertragung zwischen der Energieübertragungseinrichtung (11) der ersten Steckereinheit (10) und der Energieübertragungseinrichtung (21) der zweiten Steckereinheit (20)
umfasst.

11. Vorrichtung (100) nach Anspruch 10, wobei die zumindest eine drahtlose Kommunikationsverbindung (102) bidirektional ist.

12. Vorrichtung (100) nach Anspruch 10, wobei bei der Kopplung der zwei Steckeinheiten (10; 20) die jeweiligen Energieübertragungseinrichtungen und Signalsende- und/oder Signalempfangseinrichtungen im Wesentlichen gas- und fluiddicht gegenüber der Umgebung abgedichtet ist.
